# EUROPEAN PATENT APPLICATION

(11) **EP 1 475 694 A2**
(43) Date of publication of application: **10.11.2004**
(21) Application number: 04010427.5
(22) Date of filing: 03.05.2004
(51) Int. Cl.: G06F 3/12

(54) **Transactional printer with wireless communication to host**

(30) Priority: 08.05.2003 US 434415
(71) Applicant: Transact Technologies Incorporated, Wallingford, CT 06492 (US)
(72) Inventor: Brooks, Donald E., Ithaca New York 14850 (US)
(74) Representative: HOEGER, STELLRECHT & PARTNER Patentanwälte

(57) **Abstract**

A wireless transactional printer is provided. Data and control signals are communicated between the printer and a wireless adapter via a serial port. The serial port also provides power from the printer power supply to power the wireless adapter using a standard serial port connector. In order to provide the wireless communication, the wireless adapter can be provided with a radio module, such as a wireless PCMCIA transceiver. The radio module also receives power from the printer power supply via the serial port connector.

## Description

### Field of the Invention

This invention relates to transactional printers and, in particular, to a transactional printer that communicates wirelessly with a host computer . The invention is particularly useful, e.g., in connection with point-of-sale (POS) printers and the like.

### Background of the Invention

High speed printers, such as inkjet, thermal, dye sublimation and dot matrix printers are used to provide vouchers, coupons, tickets, receipts and the like to consumers. In a retail environment, a small shop may simply have one receipt printer coupled to a POS terminal (e.g., cash register), whereas a department store would have a large number of receipt printers, each coupled to a respective POS terminal in a network environment. In either instance, present printer designs require the printer to be hard wired to the POS terminal. The terminal will also be wired to a stand alone computer (e.g., a PC) or to a network. Another cable will typically run between the POS terminal and a display. A power cord is also required for the POS terminal.

It would be advantageous to simplify the installation of a POS system by providing a wireless printer. The use of a wireless printer would also reduce the number of unsightly cables required in a POS system. New and updated printer functionality could also be provided by sending data and/or control software to a wireless printer over the wireless link.

It would be particularly advantageous to provide for the conversion of a conventional, wired printer into a wireless printer without requiring significant hardware changes. In this manner, existing printer models could be used without having to introduce an entirely new printer product. In particular, it would be advantageous to provide wireless printer capability using an existing printer interface, such as a serial RS-232 interface, to provide communications between the printer and a wireless module, such as an RF module complying with the IEEE 802.11 wireless networking standard. It would be still further advantageous to provide a wireless interface adapter for a standard printer, that enables the use of a wireless module solely through the printer's serial port, without the need for any further connections such as a separate power connection.

The present invention provides apparatus and methods for implementing a wireless printer having the aforementioned and other advantages.

### SUMMARY OF THE INVENTION

In accordance with the invention, a transactional printer is provided that is capable of wireless communication with a host. The printer includes a printer housing. A printer mechanism is situated in the housing for printing on a substrate (e.g., paper, ticket stock, Mylar, foil, plastic sheeting, etc.). A controller is provided for the printer mechanism. Also provided is a power supply for the controller and printer mechanism. An interface is situated in the housing for communicating data and control signals between the controller and a wireless adapter via a serial port. The serial port comprises a connector situated in the housing for carrying the data and control signals between the wireless adapter and the interface. The connector also provides power from the power supply to power the wireless adapter. The data and control signals are wirelessly communicated between the wireless adapter and the host. The wireless adapter either includes or is coupled to a radio module that provides the wireless communication. For example, the radio module can comprise a PCMCIA wireless transceiver card that plugs into a PCMCIA socket of the wireless adapter. The radio module is also powered by the printer power supply via the serial port connector.

In an illustrated embodiment, the serial port is an RS-232 port. Moreover, the connector is a DB-9 connector. The DB-9 connector can provide power to the wireless adapter via pin 9.

The printer can comprise, for example, a POS printer. For example, the printer can be an ink-jet printer. Alternatively, the printer can be a thermal printer, or any other type of transaction printer now or hereafter known.

A method is disclosed for providing wireless communication between a transactional printer and a host. The printer has a controller for controlling the printer mechanism, and a power supply for powering the printer mechanism and the controller. A serial. port connector is provided on the printer, and is coupled to the controller via an interface. A wireless adapter is connected to the serial port connector via a complimentary connector of the wireless adapter. Data and control signals are communicated between the host and the controller via the wireless adapter, the serial port connector, and the interface. Power is provided from the power supply to the wireless adapter via the serial port connector.

The serial port connector can be one that complies with the RS-232 standard. The connector can comprise a DB-9 connector. The DB-9 connector can provide power to the wireless adapter via pin 9 thereof.

### BRIEF DESCRIPTION OF THE DRAWINGS

For a further understanding of the present invention, reference will be made to the following detailed description of the invention which is to be read in association with the accompanying drawings, wherein:
FIG. 1 is a diagram of a POS printer that incorporates the present invention;
FIG. 2 shows a standard nine pin DB-9 connector of the type commonly used with an RS-232 serial port; and
FIG. 3 is a block diagram of a wireless printer in accordance with the present invention.

### DETAILED DESCRIPTION OF THE INVENTION

Turning now to the drawings, there is illustrated a printer, generally referenced 10, that embodies the teachings of the present invention. It is noted that the illustrated printer is only one example embodiment of a printer that can incorporate the features of the present invention. The printer can comprise, for example, an ink jet printer such as the model PJ 1000 or PJ 1500 printers manufactured by TransAct Technologies Incorporated of Ithaca, New York, USA, the assignee of the present invention. It could also comprise a thermal printer such as the TransAct iTherm 280 printer. Other printer technologies such as dye-sublimation, laser, dot matrix, etc. can also be used in accordance with the present invention.

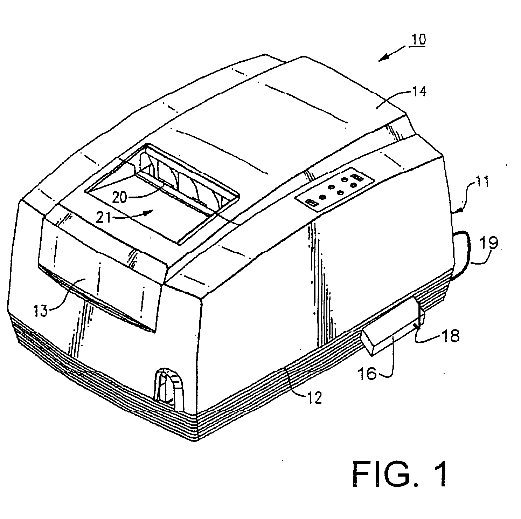

Referring to Figure 1, there is shown a POS receipt printer, generally referenced 10, embodying the teachings of the present invention. Although the present invention will be described with specific reference to a small point of sale printer, it should be evident to one skilled in the art that the invention has broader application and can be employed in conjunction with other types of printers.

The printer 10 includes a housing 11 that is mated with a wireless printer base 12 in accordance with the invention. A pair of covers 13 and 14 are pivotally mounted to the housing 11 so that they can be moved between a closed position as shown in FIG. 1 and an open position (not shown). The front cover 13 is positioned over a print out station of the machine while the rear cover 14 is positioned over a paper supply bin. The supply bin is arranged to accept a roll of paper stored inside the printer that provides the substrate upon which data that is provided to the printer from a host computer or the like is printed. Although the term paper will be used herein in reference to the substrate material, it should be understood that the term is used in the broadest sense and can include any material such as thermal paper and the like that is known and used in the art. The illustrated printer utilizes a drop-in concept wherein the roll of paper is simply dropped into the supply bin through the open rear cover and the leading edge of the roll is threaded through a paper feed path. The printer 10 is designed to automatically advance the leading edge of the roll through the printing station and then through an opening 20 in the housing into a read out station 21.

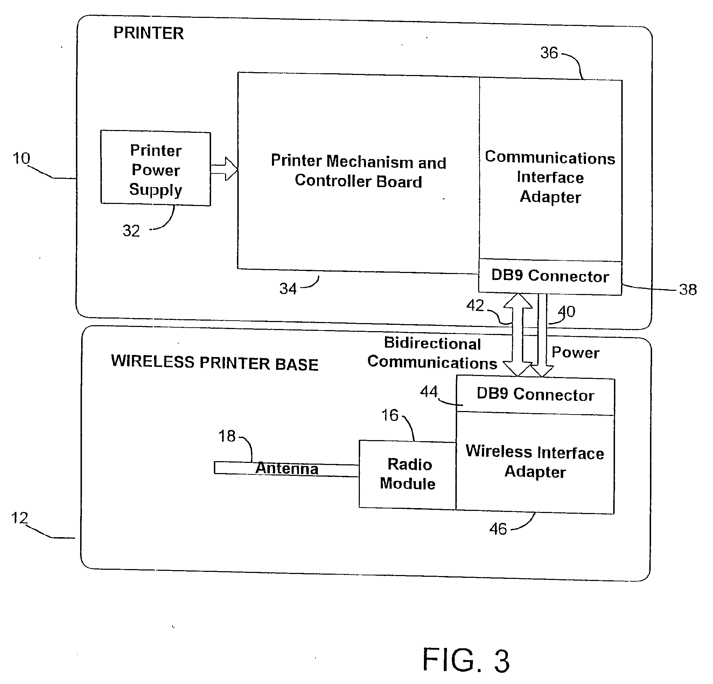

In accordance with the invention, a wireless printer base 12 is provided under the printer 10. It should be appreciated that instead of a base 12 as shown, the wireless module of the present invention could be a separate stand-alone box connected to the printer, or a unit that attaches to the back, top, or either side of the printer. In either case, the wireless module includes a radio module 16 for communicating with a host computer to receive data for the printer and send printer data back to the host. An external antenna 18 can be provided on the radio module 16 if necessary to obtain the desired radio frequency (RF) signal strength. Radio module 16 can comprise, for example, a PCMCIA card that plugs into a corresponding slot in the wireless printer base 12. A PCMCIA card is a credit card-size device that connects to a personal computer or other device having a central processing unit (CPU). Such cards comply with standards established by The Personal Computer Memory Card International Association. Although a PCMCIA card is shown in Figure 1, it should be appreciated that the RF portion of the device can be built into the wireless printer base (e.g., as an integral portion of the wireless interface adapter 46 described in connection with Figure 3) instead of being a separate removable module.

In the embodiment illustrated, base 12 is electrically connected to the printer 10 via a cable 19 that connects the standard serial port of the printer (e.g., a port meeting the well known RS-232 standard) to a corresponding serial port of the wireless printer base 12. For example, both of the serial ports can use standard DB-9 connectors, with the cable being terminated in connectors that mate therewith. Instead of using a cable 19 as shown, the base 12 can be designed to directly mate with the printer, e.g., through corresponding male and female DB-9 connectors respectively mounted to the printer 10 and base 12. Alternatively, an adapter module having a plastic housing or the like could be provided to couple corresponding DB-9 connectors of the printer 10 and base 12.

The RS-232 serial communications standard was developed by the Electronic Industries Association as a common interface standard for data communications equipment. This standard ensures reliable communication, and enables the interconnection of equipment produced by different manufacturers. RS-232 specifies signal voltages, signal timing, signal function, a protocol for information exchange, and mechanical connectors.

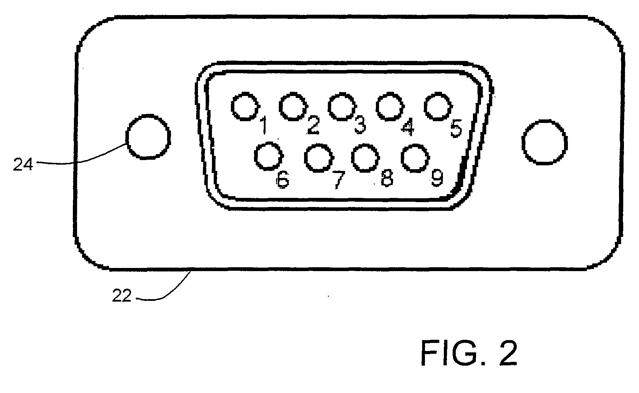

One such mechanical connector is the DB-9 connector, the configuration of which is illustrated in Figure 2. As shown, the connector 22 provides nine separate connections. It is provided in a male version with pins and a mating female version with sockets that accept the pins. Holes 24 are provided to accommodate threaded locking members which ensure that once connected, the male and female portions will not separate until it is intended to disconnect them.

Table 1, which follows, sets forth the standard pin assignments for each of the nine DB-9 connections. These are:

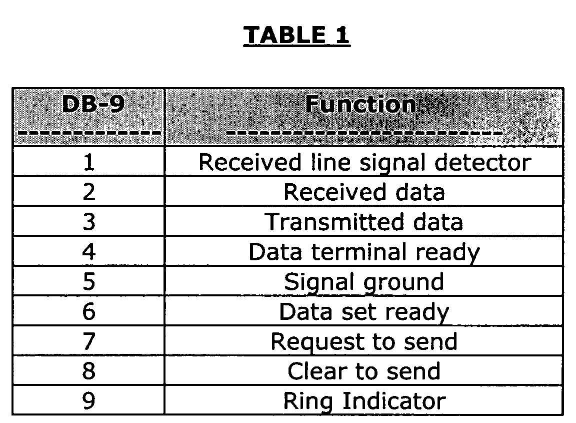

The present invention takes advantage of the fact that not all of the standard RS-232 signals set forth in Table 1 are necessary to couple a printer to a wireless communication module. In particular, the ring indicator signal on pin 9 is not necessary for wirelessly communicating serial data between the printer 10 and a host computer that receives signals from the radio module 16. Thus, in accordance with the invention, the conventional RS-232 pin assignment is modified to provide power on pin 9. This power pin is used (in combination with ground at pin 5) by a wireless interface adapter 46 (Figure 3) and the radio module 16, thereby obviating the need for a separate power connector for these devices.

The block diagram of Figure 3 illustrates the main electronic components that are used to provide wireless communication between a printer and a host in accordance with the invention. The components found in the printer 10 of a preferred embodiment are a printer power supply 32, a printer mechanism and controller board 34, and a communications interface adapter 36. The adapter 36 includes a standard DB-9 serial connector 38, which is utilized for communications between the printer and the host via the radio module 16 and a wireless interface adapter 46.

In the embodiment shown, the wireless printer base 12 includes the wireless interface adapter 46, into which the radio module 16 (with antenna 18) plugs. The wireless interface adapter 46 includes a DB-9 connector 44 which is coupled (e.g., via cable 19 of Figure 1) to the connector 38 of the communications interface adapter 36 in the printer 10. As shown in Figure 3, the signals transferred across the serial interface include both data (on bi-directional communications path 42) and power (from the printer on path 40 - e.g., DB-9 connector pins 5 and 9). It should be appreciated that the embodiment shown in Figure 3 is for purposes of illustration only, and that other embodiments are possible. For example, different types of connectors can be used instead of the DB-9 connectors mentioned.

As mentioned above, the communications interface adapter 36 provides both communications and power to the radio module 16 and wireless interface adapter 46 via a single cable. All power is derived from the printer power supply 32. In the preferred embodiment, the radio and wireless interface adapter reside in the printer base attached to the printer. Data to be printed is received by radio module 16 from a host computer (not shown) via a wireless link, such as an 802.11 b link. Similarly, status data from the printer is reported back to the host via the wireless link. 802.11 refers to a family of specifications developed by the Institute of Electrical and Electronics Engineers (IEEE) for wireless local area network (LAN) technology. 802.11 specifies an over-the-air interface between a wireless client and a base station or between two wireless clients.

The printer mechanism and controller board 34 are standard components of the printer, and are well known in the art. The communications interface adapter 36 is also a standard component of a transactional printer such as the TransAct printers mentioned above. This adapter includes an RS-232 serial port designed to communicate with a hard wired local area network or to communicate directly with a POS terminal via a cable. The wireless interface adapter 46 of the present invention processes the data communicated across the RS-232 port so that it will be compatible with the radio module 16. In an embodiment where the radio module comprises a PCMCIA card, the adapter 46 provides a PCMCIA socket with signals as defined by the PCMCIA standard. Power for both the adapter 46 and the radio module 16 is provided by the printer power supply 32 via the RS-232 serial port as described above. Thus, no separate power cables are required for the wireless printer base 12 or the components thereof.

Various radio modules are available that can be used for the wireless communication described herein. One example is the Spectrum 24 multimode OEM module in a Type II PCMCIA form factor marketed by Symbol Technologies, Inc. of Holtsville, New York, USA. It should be appreciated that the host computer will require a wireless communication link compatible with the link provided at the printer. Such components are also available from Symbol Technologies and other vendors, and are well known in the art. It is noted that the radio module 16 does not have to be a separate module as shown, as the components thereof can be built into the wireless interface adapter.

It should now be appreciated that the present invention provides a transactional printer that is capable of wireless communication with a host. The printer includes a printer housing. A printer mechanism is situated in the housing for printing on a substrate. A controller is provided for the printer mechanism. Also provided is a power supply for the controller and printer mechanism. An interface is situated in the housing for communicating data and control signals between the controller and a wireless adapter via a serial port. The serial port comprises a connector situated in the housing for coupling to the wireless adapter. The connector carries the data and control signals between the wireless adapter and the interface. The connector also provides power from the power supply to power the wireless adapter. The data and control signals are wirelessly communicated between the wireless adapter and the host. In order to provide the wireless communication, the wireless adapter can be provided with a radio module, such as a wireless PCMCIA transceiver. The radio module also receives power from the printer power supply via the serial port connector.

While the present invention has been shown and described with reference to the preferred mode as illustrated in the drawings, it will be understood by those skilled in the art that various changes in detail may be effected therein without departing from the spirit and scope of the invention as defined by the following claims.

## Claims

1. A transactional printer capable of wireless communication with a host, comprising:
a printer housing;
a printer mechanism situated in said housing for printing on a substrate;
a controller for said printer mechanism;
a power supply for said controller and printer mechanism; and
an interface situated in said housing for communicating data and control signals between said controller and a wireless adapter via a serial port; wherein:
said serial port comprises a connector situated in said housing for carrying said data and control signals between said wireless adapter and said interface;
said connector provides power from said power supply to power said wireless adapter; and
said data and control signals are wirelessly communicated between said wireless adapter and said host.

2. A transactional printer in accordance with claim 1, further comprising a radio module coupled to said wireless adapter for providing said wireless communication, said radio module also being powered by said power supply via said connector.

3. A transactional printer in accordance with claim 2, wherein said radio module comprises a PCMCIA card and said wireless adapter includes a PCMCIA socket for receiving said card.

4. A transactional printer in accordance with one of claims 1 to 3, wherein said serial port is an RS-232 port.

5. A transactional printer in accordance with claim 4, wherein said connector is a DB-9 connector.

6. A transactional printer in accordance with claim 5, wherein said DB-9 connector provides power to said wireless adapter via pin 9.

7. A transactional printer in accordance with one of claims 1 to 6, wherein said printer is a POS printer.

8. A transactional printer in accordance with claim 7 wherein said printer is an ink-jet printer.

9. A transactional printer in accordance with claim 7 wherein said printer is a thermal printer.

10. A method for providing wireless communication between a transactional printer and a host, said printer including a printer mechanism, a controller for controlling said printer mechanism, and a power supply for powering said printer mechanism and said controller, comprising:
providing a serial port connector on said printer, said connector being coupled to said controller via an interface;
connecting a wireless adapter to said serial port connector via a complimentary connector of said wireless adapter;
communicating data and control signals between said host and said controller via said wireless adapter, said serial port connector and said interface; and
providing power from said power supply to said wireless adapter via said serial port connector.

11. A method in accordance with claim 10, wherein said serial port connector complies with the RS-232 standard.

12. A method in accordance with claim 10 or 11, wherein said connector is a DB-9 connector.

13. A method in accordance with claim 12, wherein said DB-9 connector provides power to said wireless adapter via pin 9.

14. A method in accordance with one of ciaims 10 to 13, wherein said printer is a POS printer.

15. A method in accordance with claim 14 wherein said printer is an ink-jet printer.

16. A method in accordance with claim 14 wherein said printer is a thermal printer.
